# FASCICULE DE BREVET EUROPEEN

(11) **EP 0 727 948 B1**
(45) Date de publication et mention de la délivrance du brevet: **08.07.1998**
(21) Numéro de dépôt: 95900808.7
(22) Date de dépôt: 08.11.1994
(51) Int. Cl.: A23L 3/22, A23L 3/015, A23B 7/005, A23B 9/02, A23B 9/00, A23L 3/18, A23L 2/04, A23L 2/10

(54) **INSTALLATION POUR LE TRAITEMENT DE MATIERES BIOLOGIQUES HYDRATEES**
BEHANDLUNGSVORRICHTUNG FÜR BIOLOGISCHES WASSERHALTIGES MATERIAL
APPARATUS FOR PROCESSING HYDRATED BIOLOGICAL MATERIALS

(30) Priorité: 08.11.1993 FR 9313286
(43) Date de publication de la demande: 28.08.1996
(73) Titulaire: Cogat, Pierre-Olivier, F-92260 Fontenay aux Roses (FR)
(72) Inventeur: Cogat, Pierre-Olivier, F-92260 Fontenay aux Roses (FR)
(74) Mandataire: Vuillermoz, Bruno
(86) Numéro de dépôt international: FR9401297
(87) Numéro de publication internationale: WO9512992

(56) Documents cités:
- AT-A- 2 400 851
- AU-A- 464 080
- FR-A- 2 342 670
- FR-A- 2 490 502
- FR-A- 2 542 169
- FR-A- 2 638 333
- FR-A- 2 656 547

## Description

### Domaine Technique

L'invention concerne le traitement de matières biologiques hydratées, plus précisément le domaine de l'extraction de jus et d'arômes à partir de substrats végétaux divers, tels que fruits, légumes ou autres feuilles. Elle concerne plus précisément une installation dans laquelle il n'y a pas lieu d'ajouter d'eau exogène pour chauffer ou blanchir lesdites matières.

### Techniques antérieures

Il a été proposé dans le document FR-A-2 656 547 du Demandeur, un appareillage continu pour désaérer, chauffer, maintenir en température et refroidir sous vide les matières organiques solides. Cette installation comporte principalement une chambre de chauffe dans laquelle est injectée de la vapeur à haute température pour provoquer le chauffage de la matière à traiter. Cette matière chauffée est ensuite transférée dans une chambre de détente, dans laquelle règne une pression inférieure à 0,1 bar et où se produit la vaporisation de l'eau contenue à l'intérieur de ladite matière à traiter. On obtient ainsi une matière solide plus légère et apte à être traitée soit par pressurage ou par un autre moyen de conditionnement. Cette installation donne parfaite satisfaction, mais présente l'inconvénient de necessiter l'injection d'une vapeur exogène pour chauffer la matière à traiter, cet ajout de vapeur d'eau entraînant un phénomène de dilution de la matière à traiter, dilution qui doit être compensée par une étape de concentration supplémentaire. La nécessité d'un dispositif de concentration complique l'installation globale et diminue l'intérêt économique de cette installation. En outre, l'ajout d'une vapeur exogène est généralement proscrit, notamment dans la viticulture ou pour l'obtention de jus de fruit dit "pur jus".

Dans le document FR 2 638 333, on a proposé une installation concernant plus particulièrement le traitement des plantes à parfums et condimentaires nécessitant plusieurs extractions. Cette installation permet de réaliser plusieurs extractions sur un même substrat avec un matériel unique mais présente l'inconvénient de travailler en discontinu, et surtout de nécessiter une source de vapeur exogène.

### Brève description de l'Invention

L'objet de l'invention concerne une installation du type en question ne présentant pas les inconvénients ci-dessus.

Elle vise une installation pour le traitement en continu de matières biologiques hydratées comprenant :
. un moyen d'amenée desdites matières,
. une chambre de chauffe à la vapeur, où avancent les matières,
. une chambre de détente à pression réduite, pour refroidir la matière chaude issue de la chambre de chauffe et à vaporiser une partie de l'eau contenue dans les matières, ladite chambre de détente étant reliée respectivement à la chambre de chauffe par un moyen apte à maintenir une différence de pression entre les deux chambres, et à un condenseur relié à son tour à une source de vide,
   caractérisée en ce qu'elle comprend :
   - des moyens pour récupérer les condensats et exsudats chauds formés dans la chambre de chauffe ;
   - des moyens pour chauffer et vaporiser ces condensats et exsudats chauds ;
   - et des moyens pour amener et pour injecter dans la chambre de chauffe les vapeurs de condensats et d'exsudats issues de ces moyens de vaporisation.

Autrement dit, l'invention consiste à récupérer les condensats de vapeur et une partie du liquide suintant de la matière lors de son chauffage dans la chambre de chauffe, puis à chauffer et vaporiser ce liquide récupéré pour le renvoyer sous forme de vapeur dans la chambre de chauffe. Ainsi, la vapeur servant au chauffage est directement issue de la matière et on évite d'utiliser de l'eau extérieure, ne faisant pas partie de la matière première.

Dans une forme pratique de réalisation, la chambre de chauffe comprend au moins une vis hélicoïdale rotative autour d'un arbre, destinée à faire avancer la matière, entourée vers le bas par un élément perforé, tel qu'une grille, destiné à recueillir les condensats et exsudats chauds au fur et à mesure de sa formation pour l'amener dans le moyen de récupération, ledit arbre rotatif épousant la forme d'un tube relié à son extrémité d'entrée au moyen d'amenée des vapeurs d'exsudat, percé en périphérie d'une pluralité d'orifices destinés à injecter les vapeurs d'exsudat dans la chambre de chauffe au voisinage des matières qui avancent.

En d'autres termes, la matière à traiter dans la chambre de chauffe est entraînée par une vis d'Archimède et la vapeur injectée sur cette matière provient d'une part, de la périphérie de la vis à travers une grille et d'autre part, par le centre de la vis. Cela assure une pénétration de la vapeur jusqu'au coeur de la matière.

Avantageusement, en pratique, le moyen pour chauffer et vaporiser les condensats et exsudats chauds, est constitué par un échangeur à surface, à flot tombant et à faible différence de température.

En utilisant un échangeur à flot tombant, le temps de passage des condensats et exsudats est très réduit. Par ailleurs, l'utilisation d'un échangeur à faible différence de température entre la source de chaleur et les exsudats à chauffer, permet d'éviter des phénomènes de calcination, et de dépôt donnant des goûts de cuit.

Dans une forme pratique de réalisation, l'installation comprend également :
- des moyens pour extraire de la chambre de détente, la matière traitée pour l'amener à une presse destinée à séparer les matières solides et le jus pressé ;
- et des moyens pour, à la demande, soit extraire ce jus, soit l'amener dans le circuit de récupération des condensats et exsudats chauds en amont de l'échangeur.

De cette manière, il est possible de récupérer le jus issu du pressurage pour l'acheminer jusqu'à l'échangeur pour le vaporiser partiellement afin d'injecter la vapeur émise dans la chambre de chauffe. Dans cette forme de réalisation, la vapeur servant à la chauffe provenant du jus assure une préconcentration de ce jus.

Avantageusement, en pratique :
- le moyen pour amener le jus dans le circuit de condensats et d'exsudats chauds, comprend un bac de récupération où débouchent lesdits condensats-exsudats et le jus, ainsi qu'une pompe de transfert du mélange contenu dans le bac de récupération vers l'échangeur ;
- le circuit des exsudats chauds comprend deux vannes destinées, à la demande, soit à éliminer directement partie de ces condensats-exsudats, soit à envoyer ces condensats-exsudats vers le bac de récupération ;
- l'installation comprend également des moyens permettant à la demande, soit d'extraire les condensats-exsudats liquides issus de l'échangeur, soit de les amener à la chambre de détente ;
- l'installation comprend également des moyens permettant, à la demande, soit d'extraire les condensats aromatiques, générés par la détente sous vide et issus du condenseur, soit de les amener à la chambre de détente.

Dans une forme pratique de réalisation, la chambre de détente comprend, dans l'ordre, de bas en haut :
- une portion haute cylindrique reliée au condenseur du type à faible perte de charge pour les vapeurs traitées, cette partie cylindrique présentant une section appréciable pour éviter l'entraînement des matières chauffées issues de la chambre de chauffe ;
- une portion médiane comprenant une succession de grilles parallèles à travers lesquelles passent les vapeurs, puis une amenée de la matière issue de la chambre de chauffe ;
- et une portion basse tronconique resserrée sur les parois de laquelle glisse la matière.

### Description sommaire des dessins

La manière de réaliser l'invention et les avantages qui en découlent, apparaitront clairement à l'exposé du mode de réalisation suivant, à l'appui des figures annexées.

La figure 1 est un plan d'ensemble de l'installation.

Les figures 2 et 3 sont des vues en coupe de la chambre de chauffe, respectivement vue de dessus et vue de côté.

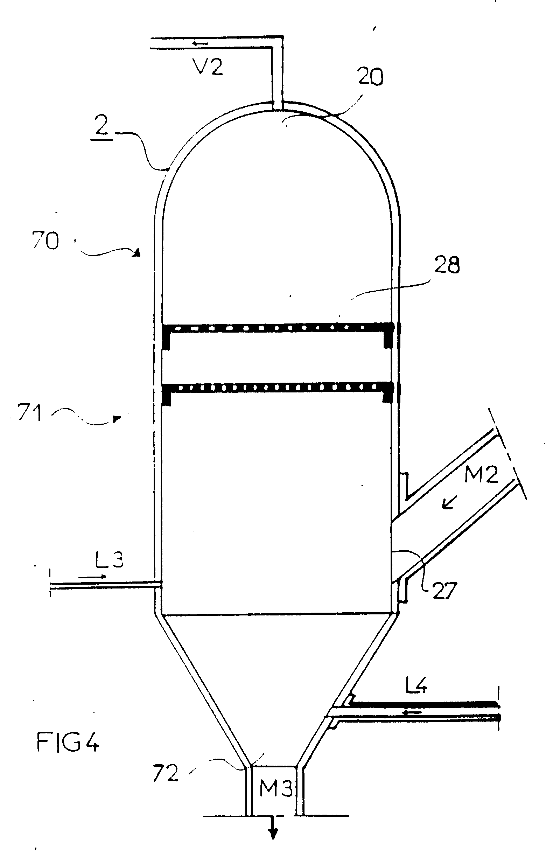

La figure 4 est une vue en coupe de la chambre de détente.

La figure 5 est une vue en coupe de l'échangeur.

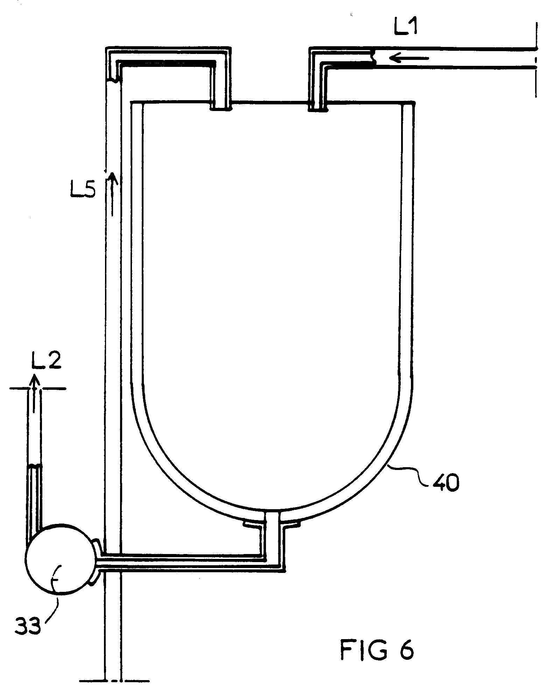

La figure 6 est une vue de détail du bac de récupération.

### Manière de réaliser l'Invention

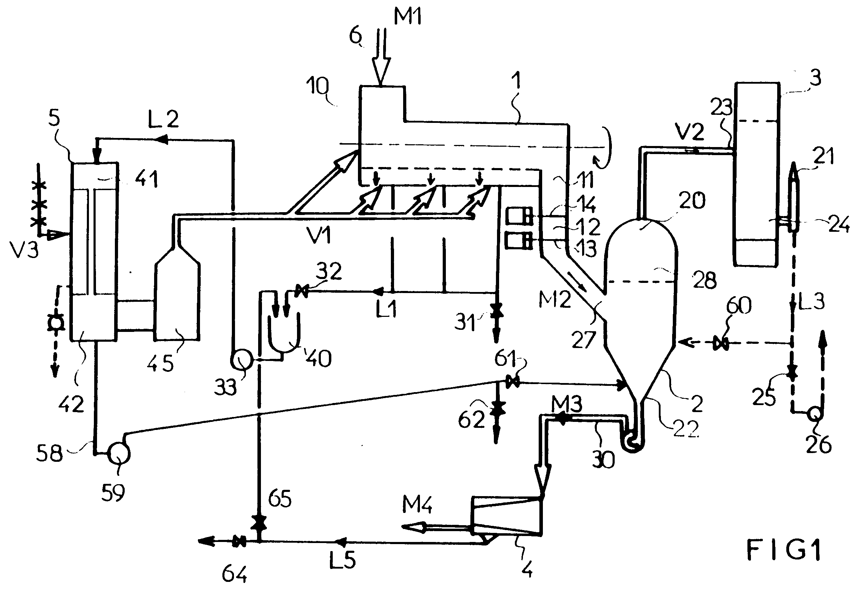

Globalement, comme représenté à la figure 1, l'installation comprend une chambre de chauffe (1), une chambre de détente (2), un condenseur (3), une presse (4), un échangeur (5) et toute une série de tuyauteries et de pompes et de vannes aptes à mettre en communication ces éléments entre eux.

L'acheminement de la matière (M1) à traiter dans la chambre de chauffe se fait par des moyens (6) d'amenée classique. Il peut s'agir de tapis pour transporter des fruits entiers ou de pompes pour alimenter la chambre de chauffe en petites baies. Ces moyens (6) d'amenée évitent les frottements et la dégradation des fruits.

La chambre de chauffe (1) présente une forme cylindrique allongée, l'arrivée de la matière (M1) se faisant par une extrémité du cylindre et la sortie par l'extrémité (11) opposée. La sortie (11) de la chambre de chauffe (1) est reliée à la chambre de détente (2) par un sas (12) permettant de maintenir la différence de pression entre la chambre de chauffe (1), qui est à pression atmosphérique, et la chambre de détente (2) qui est à pression réduite, typiquement entre 0,1 et 0,03 bar. Ce sas (12) peut être constitué par deux guillotines (13,14) telles que représentées à la figure 1, ou être remplacé de manière équivalente par une pompe volumétrique.

La partie haute (20) de la chambre de détente (2) est reliée à un condenseur (3) lui-même relié à une pompe à vide (21). La chambre de détente (2) est destinée à recevoir par gravitation la matière (M2) issue de la chambre de chauffe (1). L'extrémité inférieure (22) de la chambre de détente (2) est reliée à un circuit (30) de pressurage de la matière (M3) à traiter. Le condenseur (3), du type à surface ou à mélange, se caractérise par de faibles pertes de charge pour le passage de la vapeur. Les vapeurs (V2) aspirées pénètrent dans le condenseur (3) par sa partie haute (23) et sont aspirées par la partie basse (24). Par ailleurs, le liquide (L3) condensé est recueilli dans un circuit permettant soit l'extraction au moyen de la varie (25) et de la pompe (26) soit leur réintégration au bas de la chambre de détente (2). En partie médiane, au dessus de l'arrivée (27) de matière issue de la chambre de chauffe (1), la chambre de détente (2) comporte une série de grilles (28) parallèles, à travers lesquelles passent les vapeurs (V2).

Le circuit de pressurage est principalement constitué d'une presse (4) dont le type est adapté en fonction de la matière et notamment des fruits à traiter. Cette presse (4) permet de séparer les matières solides (M4) pressées d'un jus de presse (L5) qui peut être soit stocké en vue de son utilisation ultérieure, soit réutilisé selon une caractéristique de l'invention.

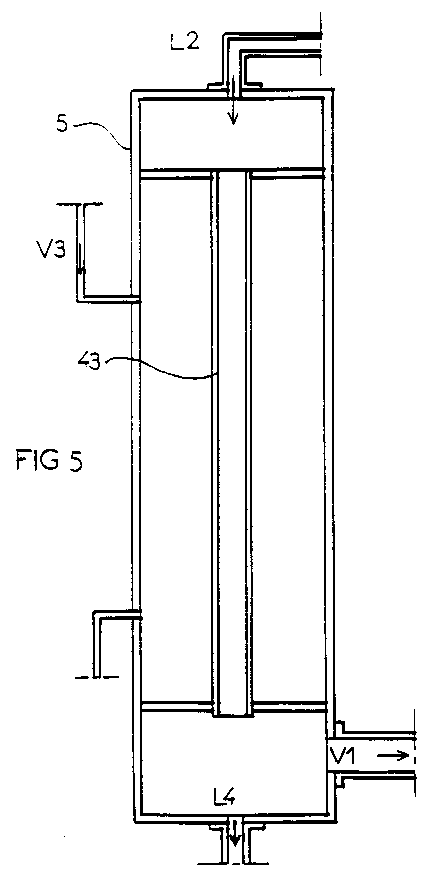

La principale caractéristique de l'invention réside dans le fait que la vapeur (V1) utilisée dans la chambre de chauffe (1) est directement obtenue à partir de la matière (M1) à traiter. Conformément à l'invention, la chambre de chauffe comporte des moyens pour récolter les condensats-exsudats L1 de la matière chauffée (M1), c'est-à-dire des liquides suintants du fait du transport et du chauffage de cette matière (M1). Lorsque ces condensats-exsudats (L1) sont récupérés, ils sont soit simplement éliminés par la vanne (31), soit acheminés vers un bac (40) de récupération via la vanne (32). Ce bac de récupération (40) est relié au moyen d'une pompe (33) à un échangeur permettant la vaporisation de cesdits condensats-exsudats (L1). Comme représenté à la figure 5, l'échangeur (5) utilisé est du type à flot tombant, c'est-à-dire que le liquide (L1) à réchauffer arrive par la partie haute (41) de l'échangeur (5) et coule jusqu'à la base (42) de cedit échangeur (5). Ce liquide (L2) ruisselle sur les parois (43) internes de l'échangeur (5), lesquelles parois (43) sont au contact d'une source de chaleur, typiquement une vapeur secondaire (V3), issue d'une chaudière classique.

Selon une autre caractéristique de l'invention, l'écart de température entre le liquide (L2) et la vapeur secondaire (V2) est faible, typiquement de l'ordre de 5 à 10°C, pour éviter que les exsudats (L2) se déposent, s'accrochent sur les parois (43) puis se calcinent, provoquant ensuite la dégradation des échanges de chaleur. La base (42) de l'échangeur de chaleur est reliée à un cyclone (45) destiné à séparer les exsudats (L4) liquides des exsudats L1 vaporisés et envoyer cette vapeur (V1) à la chambre de chauffe (1).

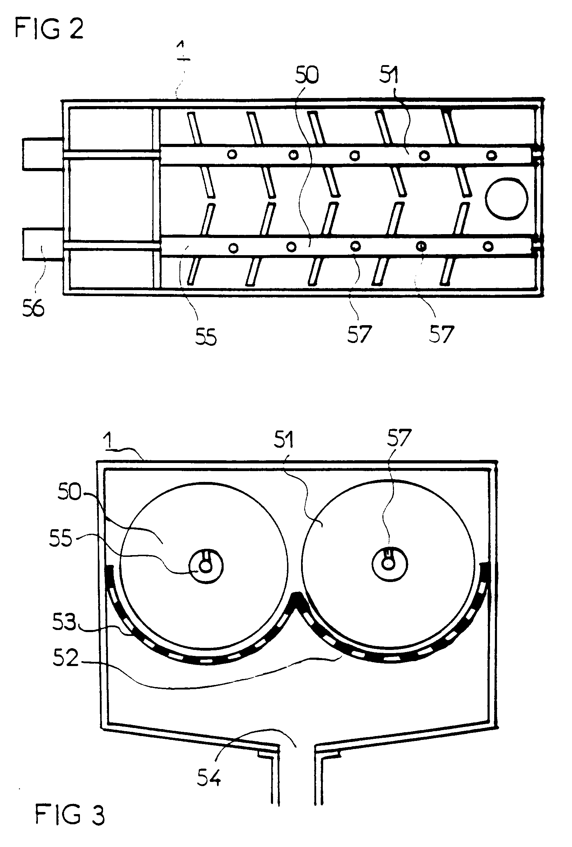

En pratique, comme représenté aux figures 2 et 3, la chambre de chauffe (1) comprend deux vis d'Archimède (50,51) à pas inversés, entraînant la progression de la matière (M1) d'une extrémité (10) à l'autre (11). Chacune de ces vis (50,51) tournent à l'intérieur d'un demi-cylindre (52,53) perforé, à travers lequel les exsudats (L1) s'écoulent, de la matière (M1) vers le bas (54) de la chambre de chauffe (1), et à travers lequel les vapeurs (V1) de condensats-exsudats issues de l'échangeur (5), montent en direction de la matière (M1) à chauffer. Parallèlement, l'axe (55) de chaque vis (50,51) est relié à l'arrivée (56) de vapeur (V1) issue de l'échangeur (5). Chaque axe (55) est percé d'une multitude d'orifices (57) à travers lesquels la vapeur (V1) est injectée en direction de la matière (M1). De cette manière, la vapeur (V1) pénètre au coeur de la matière (M1) à traiter.

Dans une variante, l'échangeur (5) et le cyclone (45) sont équipés d'une canalisation (58) et d'une pompe (59), aptes à extraire les exsudats (L4) non vaporisés ou à les acheminer vers la chambre de détente (2).

Les exemples suivants montrent l'utilisation de l'installation pour différents types de fruits.

### Exemple 1

Pour obtenir un jus à partir de fruits facilement pressables, à l'opposé de fruits à coque ou à haute teneur en fibres, on utilise l'installation de la manière suivante.

Au niveau de la chambre de chauffe (1), les condensats-exsudats L1 obtenus sont vaporisés au niveau de l'échangeur (5), puis réinjectés au niveau de la chambre de chauffe pour provoquer la montée en température. Le passage de la matière chauffée dans la chambre de détente provoque la vaporisation d'environ 10 % de la masse d'eau contenue dans les fruits chauffés. Pour garder la totalité de l'eau initiale contenue dans les fruits, les vapeurs (V2) condensées sont ensuite réintégrées par la vanne (60) dans le bas de la chambre de détente (2). Parallèlement, les condensats-exsudats non vaporisés (L4) dans l'échangeur (5) sont également réintégrés au niveau du bas de la chambre de détente (2) par la vanne (61) et la pompe (59).

Ainsi, au niveau du circuit de pressurage (4), la matière (M3) à traiter comporte la même proportion d'eau que la matière première (M1) acheminée dans la chambre de chauffe (1). Ainsi, le jus obtenu (L5) peut être qualifié de pur jus.

### Exemple 2

Dans le cas d'une application viticole, l'installation peut servir à augmenter la concentration du moût dans le but d'accroître la teneur en alcool du vin. Dans ce cas, les exsudats (L1) sont transférés sur l'échangeur (5) par l'intermédiaire du bac (40) et de la pompe (33), la vanne (32) étant ouverte et la vanne (31) étant fermée. De même, le jus concentré (L4) en sortie de l'échangeur (5) est transféré vers le bas de la chambre de détente (2) par l'intermédiaire de la pompe (59), la vanne (61) étant ouverte et la vanne (62) étant fermée. Enfin, les condensats (L3) sous vide récupérés en sortie du condenseur (3), sont extraits par la vanne (25) et la pompe (26). De la sorte, on estime à environ 12 % la réduction possible du volume de la vendange.

On a pu ainsi obtenir une augmentation de la teneur en alcool de un degré Gay-Lussac.

### Exemple 3

Une troisième configuration de l'installation consiste à effectuer une pré-concentration maximale d'un jus de pression de la matière traitée, cette technique s'appliquant particulièrement aux matières premières fibreuses qui ne génèrent pas d'exsudats sucrés dans la chambre de chauffe (1), comme les ananas.

Dans ce cas, les condensats purement aqueux (L1) émanant de la chambre de chauffe (1) sont évacués par la vanne (31), alors que la vanne (32) est fermée. Parallèlement, l'échangeur (5) produit de la vapeur (V1) biologique en étant alimenté par le jus de presse (L5) produit par la presse (4) et transitant par le bac (40) et la pompe (33), la vanne (64) étant fermée alors que la vanne (65) est ouverte. De même, les condensats sous vide (L3) sont transférés du condenseur (3) vers un bac de stockage par l'intermédiaire de la pompe (26), la vanne (60) étant fermée et la vanne (25) étant ouverte. Enfin, le jus pré-concentré (L4) en sortie de l'échangeur (5) est récupéré au moyen de la pompe (59), la vanne (62) étant fermée et la vanne (61) étant ouverte.

De cette manière, on obtient une pré-concentration d'environ 25 % du jus de presse.

La description faite ci-dessus concerne l'extraction de jus à partir de fruits, mais elle peut également s'appliquer pour tout type de matières organiques ou biologiques hydratées, par exemple des légumes, des plantes aromatiques.

Il ressort clairement de l'exposé de l'invention que celle-ci présente plusieurs avantages. D'une part, elle offre la possibilité de concentrer à la demande, c'est-à-dire d'éliminer une portion de l'eau contenue dans la matière à traiter. D'autre part, elle permet par un dispositif simple et efficace, d'assurer le chauffage de la matière à traiter par de la vapeur issue directement de cette dite matière, ce qui lui permet de respecter la réglementation concernant l'interdiction d'introduire de l'eau exogène dans les jus de fruits ou les vendanges.

## Revendications

1. Installation pour le traitement de matières biologiques hydratées, du type comprenant :
. un moyen d'amenée (6) desdites matières,
. une chambre de chauffe (1) à la vapeur, où avancent les matières (M1),
. une chambre de détente (2) à pression réduite, pour refroidir la matière chaude (M2) issue de la chambre de chauffe (1) et à vaporiser une partie de l'eau contenue dans les matières (M2), ladite chambre de détente (2) étant reliée respectivement à la chambre de chauffe (1) par un moyen (12) apte à maintenir une différence de pression entre les deux chambres (1,2), et à un condenseur (3) relié à son tour à une source de vide,
caractérisée en ce qu'elle comprend :
- des moyens (40) pour récupérer les condensats-exsudats (L1) chauds formés dans la chambre de chauffe (1) ;
- des moyens (5) pour chauffer et vaporiser ces condensats-exsudats chauds (L2),
- et des moyens (45) pour amener et pour injecter dans la chambre de chauffe les vapeurs de condensats-exsudats issues de ces moyens (5) de vaporisation.

2. Installation selon la revendication 1, caractérisée en ce que la chambre de chauffe (1) comprend au moins une vis hélicoïdale (50,51) rotative autour d'un arbre (55), destinée à faire avancer la matière (M1), entourée vers le bas par un élément perforé (52,53), destiné à accueillir le condensat-exsudat chaud (L1) au fur et à mesure de sa formation pour l'amener dans le moyen (40) de récupération, ledit arbre rotatif (55) épousant la forme d'un tube relié à son extrémité d'entrée au moyen d'amenée (56) des vapeurs (V1) de condensat-exsudat, percé en périphérie d'une pluralité d'orifices (57) destinés à injecter les vapeurs de condensat-exsudat (V1) dans la chambre de chauffe (1) au voisinage des matières qui avancent.

3. Installation selon l'une des revendications 1 ou 2, caractérisée en ce que le moyen pour chauffer et vaporiser les condensats-exsudats (L1) chauds, est constitué par un échangeur (5) à flot tombant et à faible différence de température.

4. Installation selon l'une des revendications 1 à 3, caractérisée en ce qu'elle comprend également :
- des moyens pour extraire de la chambre de détente (2), la matière traitée (M3) pour l'amener à une presse (4) destinée à séparer les matières solides (M4) et le jus pressé (L5) ;
- et des moyens (64,65) pour, à la demande, soit extraire ce jus (L5), soit l'amener dans le circuit de récupération (40) des condensats-exsudats chauds (L1) en amont de l'échangeur (5).

5. Installation selon l'une des revendications 1 à 4, caractérisée en ce que le moyen pour amener le jus (L5) dans le circuit de condensats-exsudats chauds (L1), comprend un bac (40) de récupération où débouchent lesdits condensats-exsudats (L1) et le jus (L5), ainsi qu'une pompe (33) de transfert du mélange contenu dans le bac (40) de récupération vers l'échangeur (5).

6. Installation selon l'une des revendications 1 à 5, caractérisée en ce que le circuit des condensats-exsudats (L1) chauds comprend deux vannes (31,32) destinées, à la demande, soit à éliminer directement partie de ces condensats-exsudats (L1), soit à envoyer ces condensats-exsudats (L1) vers le bac de récupération (40).

7. Installation selon l'une des revendications 1 à 6, caractérisée en ce qu'elle comprend également des moyens (58,59,61,62) permettant, à la demande, soit d'extraire les condensats-exsudats liquides (L4) issus de l'échangeur (5), soit de les amener à la chambre de détente (2).

8. Installation selon l'une des revendications 1 à 6, caractérisé en ce qu'elle comprend également des moyens (60,25,26,24) permettant à la demande, soit d'extraire les condensats aromatiques, générés par la détente sous vide (L3) et issus du condenseur (3), soit de les amener à la chambre de détente (2).

9. Installation selon l'une des revendications 1 à 8, caractérisée en ce que la chambre de détente (2) comprend, dans l'ordre, de bas en haut :
- une portion haute (70) cylindrique reliée au condenseur (3) du type à faible perte de charge pour les vapeurs traitées, cette partie cylindrique (70) présentant une section appréciable pour éviter l'entraînement des matières (M2) issues de la chambre de chauffe ;
- une portion médiane (71) comprenant une succession de grilles (28) parallèles à travers lesquelles passent les vapeurs (V2), puis une amenée (27) de la matière (M2) issue de la chambre de chauffe ;
- et une portion basse (72) tronconique resserrée, sur les parois de laquelle glisse la matière (M2).

## Claims

1. Plant for the treatment of hydrated biological materials, of the type including:
• a means for delivering (6) said materials,
• a steam heating chamber (1), in which the materials travel forward (M1),
• a low-pressure decompression chamber (2) for cooling the hot material (M2) originating from the heating chamber (1) and vaporizing a proportion of the water present in the materials (M2), said decompression chamber (2) being connected, respectively, to the heating chamber (1) by a means (12) capable of maintaining a pressure difference between the two chambers (1, 2) and to a condenser (3) which is in turn connected to a vacuum source,
characterized in that it includes:
- means (40) for recovering the hot condensates-exudates (L1) formed in the heating chamber (1);
- means (5) for heating and vaporizing these hot condensates-exudates (L2),
- and means (45) for delivering and injecting into the heating chamber the condensate-exudate vapors originating from these means (5) for vaporizing.

2. Plant according to Claim 1, characterized in that the heating chamber (1) includes at least one helical screw (50, 51) rotatable around a shaft (55) and intended to propel the material (M1) forward, surrounded near the bottom by a perforated component (52, 53) intended to receive the hot condensate-exudate (L1) as it is formed in order to deliver it into the means (40) for recovery, said rotatary shaft (55) adopting the form of a pipe connected at its entry end to the means for delivering (56) the condensate-exudate vapors (V1), pierced at its periphery with a plurality of orifices (57) intended to inject the condensate-exudate vapors (V1) into the heating chamber (1) in the vicinity of the materials which are traveling forward.

3. Plant according to either of Claims 1 and 2, characterized in that the means for heating and vaporizing the hot condensates-exudates (L1) consists of a downward-flow exchanger (5) with a small difference in temperature.

4. Plant according to one of Claims 1 to 3, characterized in that it also includes:
- means for extracting the treated material (M3) from the decompression chamber (2) in order to deliver it to a press (4) intended to separate the solid materials (M4) and the pressed juice (L5);
- and means (64, 65) for, as needed, either extracting this juice (L5) or delivering it into the circuit for recovery (40) of the hot condensates-exudates (L1) upstream of the exchanger (5).

5. Plant according to one of Claims 1 to 4, characterized in that the means for delivering the juice (L5) into the circuit for hot condensates-exudates (L1) includes a recovery tank (40) into which emerge said condensates-exudates (L1) and the juice (L5), and a pump (33) for transferring the mixture contained in the recovery tank (40) toward the exchanger (5).

6. Plant according to one of Claims 1 to 5, characterized in that the circuit for hot condensates-exudates (L1) includes two valves (31, 32) intended, as needed, either to remove directly a proportion of these condensates-exudates (L1) or to convey these condensates-exudates (L1) toward the recovery tank (40).

7. Plant according to one of Claims 1 to 6, characterized in that it also includes means (58, 59, 61, 62) making it possible, as needed, either to extract the liquid condensates-exudates (L4) originating from the exchanger (5) or to deliver them to the decompression chamber (2).

8. Plant according to one of Claims 1 to 6, characterized in that it also includes means (60, 25, 26, 24) making it possible, as needed, either to extract the aromatic condensates produced by the decompression under vacuum (L3) and originating from the condenser (3) or to deliver them to the decompression chamber (2).

9. Plant according to one of Claims 1 to 8, characterized in that the decompression chamber (2) includes, in this order, from the bottom upward:
- a cylindrical top portion (70) connected to the condenser (3) of the low pressure-drop type for the treated vapors, this cylindrical part (70) having an appreciable section in order to avoid the entrainment of the materials (M2) originating from the heating chamber;
- a middle portion (71) including a succession of parallel grids (28) through which the vapors (V2) pass, and then a delivery (27) of the material (M2) originating from the heating chamber;
- and a narrow frustoconical bottom portion on the walls of which the material (M2) slides.

## Patentansprüche

1. Vorrichtung zur Behandlung wasserhaltiger biologischer Materialien, des Typs, der folgendes umfaßt:
• ein Mittel (6) zur Zuführung der genannten Materialien,
• eine Dampf-Heizkammer (1), der die Materialien (M1) zugeführt werden,
• eine Expansionskammer (2) mit vermindertem Druck zum Abkühlen des aus der Heizkammer (1) ausgetretenen heißen Materials (M2) und zum Verdampfen eines Teils des in den Materialien (M2) enthaltenen Wassers, wobei die genannte Expansionskammer (2) einerseits mit der Heizkammer (1) durch ein Mittel (12) verbunden ist, das es ermöglicht, einen Druckunterschied zwischen den beiden Kammern (1,2) aufrecht zu erhalten, und andererseits mit einem Kondensator (3) verbunden ist, welcher seinerseits mit einer Vakuumquelle verbunden ist,
**dadurch gekennzeichnet**, daß sie folgendes umfaßt:
- Mittel (40) zum Zurückgewinnen der in der Heizkammer (1) gebildeten heißen Kondensate/Exsudate (L1);
- Mittel (5) zum Erhitzen und Verdampfen dieser heißen Kondensate/Exsudate (L2),
- und Mittel (45) zum Zuführen und Injizieren der aus diesen Verdampfungsmitteln (5) ausgetretenen Kondensat/Exsudat-Dämpfe in die Heizkammer.

2. Vorrichtung nach Anspruch 1, **dadurch gekennzeichnet**, daß die Heizkammer (1) mindestens eine um eine Achse (55) drehbare, spiralförmige Schnecke (50,51) umfaßt, welche zum Fördern des Materials (M1) bestimmt ist und im unteren Bereich von einem perforierten Element (52,53) umgeben ist, welches dazu vorgesehen ist, das heiße Kondensat/Exsudat (L1) in dem Maße, in dem es gebildet wird, aufzunehmen, um es dem Rückgewinnungs-Mittel (40) zuzuführen, wobei die genannte Drehachse (55) die Form eines Rohrs annimmt, das an seinem Einlaßende mit dem Mittel (56) zur Zuführung der Kondensat-/Exsudat-Dämpfe (V1) verbunden ist und an seiner Peripherie von einer Vielzahl von Öffnungen (57) durchbrochen ist, welche zum Injizieren der Kondensat-/Exsudat-Dämpfe (V1) in die Heizkammer (1) in der Nähe der geförderten Materialien bestimmt sind.

3. Vorrichtung nach einem der Ansprüche 1 oder 2, **dadurch gekennzeichnet**, daß das Mittel zum Erhitzen und Verdampfen der heißen Kondensate/Exsudate (L1) aus einem Fallstrom-Wärmetauscher (5) mit geringem Temperaturunterschied besteht.

4. Vorrichtung nach einem der Ansprüche 1 bis 3, **dadurch gekennzeichnet**, daß sie ebenfalls folgendes umfaßt:
- Mittel zum Entnehmen des behandelten Materials (M3) aus der Expansionskammer (2), um es einer Presse (4) zuzuführen, welche dazu bestimmt ist, die Feststoffe (M4) und den ausgepreßten Saft (L5) voneinander zu trennen;
- und Mittel (64,65), um je nach Bedarf entweder diesen Saft (L5) zu entnehmen oder ihn in den in bezug auf den Wärmetauscher (5) stromaufwärts gelegenen Rückgewinnungskreislauf (40) der heißen Kondensate/Exsudate (L1) einzuleiten.

5. Vorrichtung nach einem der Ansprüche 1 bis 4, **dadurch gekennzeichnet**, daß das Mittel zum Einleiten des Saftes (L5) in den Kreislauf heißer Kondensate/Exsudate (L1) einen Rückgewinnungsbehälter (40) umfaßt, in den die genannten Kondensate/Exsudate (L1) und der Saft (L5) fließen, sowie eine Pumpe (33) zum Weiterleiten des in dem Rückgewinnungsbehälter (40) enthaltenen Gemisches zu dem Wärmetauscher (5).

6. Vorrichtung nach einem der Ansprüche 1 bis 5, **dadurch gekennzeichnet**, daß der Kreislauf der heißen Kondensate/Exsudate (L1) zwei Ventile (31,32) umfaßt, welche dazu bestimmt sind, je nach Bedarf entweder einen Teil dieser Kondensate/Exsudate (L1) direkt zu entfernen oder diese Kondensate/Exsudate (L1) zu dem Rückgewinnungsbehälter (40) zu leiten.

7. Vorrichtung nach einem der Ansprüche 1 bis 6, **dadurch gekennzeichnet**, daß sie ebenfalls Mittel (58,59,61,62) umfaßt, die es ermöglichen, je nach Bedarf diese aus dem Wärmetauscher (5) austretenden flüssigen Kondensate/Exsudate (L4) entweder zu entnehmen oder sie der Expansionskammer (2) zuzuführen.

8. Vorrichtung nach einem der Ansprüche 1 bis 6, **dadurch gekennzeichnet**, daß sie ebenfalls Mittel (60,25,26,24) umfaßt, die es ermöglichen, je nach Bedarf die durch die Expansion unter Vakuum erzeugten und aus dem Kondensator (3) austretenden aromatischen Kondensate (L3) entweder zu entnehmen oder sie der Expansionskammer (2) zuzuführen.

9. Vorrichtung nach einem der Ansprüche 1 bis 8, **dadurch gekennzeichnet**, daß die Expansionskammer (2) in der Reihenfolge von oben nach unten folgendes umfaßt:
- einen mit dem Kondensator (3) verbundenen, zylinderförmigen oberen Abschnitt (70) des Typs mit geringem Druckverlust für die behandelten Dämpfe, wobei dieser zylinderförmige Teil (70) einen ausreichenden Querschnitt aufweist, um das Mitreißen der aus der Heizkammer austretenden Materialien (M2) zu vermeiden;
- einen mittleren Abschnitt (71), der eine Reihe paralleler Gitter (28) umfaßt, durch welche die Dämpfe (V2) strömen, des weiteren eine Zuleitung (27) des aus der Heizkammer austretenden Materials (M2);
- und einen sich kegelstumpfartig verengenden, unteren Abschnitt (72), über dessen Wände das Material (M2) gleitet.
